# FASCICULE DE BREVET EUROPEEN

(11) **EP 1 619 404 B1**
(45) Date de publication et mention de la délivrance du brevet: **07.01.2009**
(21) Numéro de dépôt: 05014856.8
(22) Date de dépôt: 08.07.2005
(51) Int. Cl.: F16D 65/12

(54) **Procédé de conception de système de freinage a faible niveau de bruit**
Entwurfsverfahren für geräuscharmes Bremssystem und durch ein solches Verfahren erhaltenes System
Design method for low noise level brake system and system obtained by such a method

(30) Priorité: 22.07.2004 FR 0408110
(43) Date de publication de la demande: 25.01.2006
(73) Titulaire: ROBERT BOSCH GMBH, 70442 Stuttgart (DE)
(72) Inventeur: Bugada, Olivier, 75012 Paris (FR); Delage, Jean-Pierre, 94160 Saint Mandé (FR); Woellecke, Frank, 94130 Nogent sur Marne (FR)
(74) Mandataire: Hurwic, Aleksander Wiktor

(56) Documents cités:
- EP-A- 1 058 020
- DE-A1- 3 918 369
- US-A- 5 456 339
- US-B1- 6 186 292
- PATENT ABSTRACTS OF JAPAN vol. 015, no. 278 (P-1227), 15 juillet 1991 (1991-07-15) & JP 03 094155 A (MAZDA MOTOR CORP), 18 avril 1991 (1991-04-18)
- BAUER,H.: "Kraftfahrtechnisches Taschenbuch(24.Aufl.)" avril 2002 (2002-04), ROBERT BOSCH GMBH , STUTTGART/GERMANY , XP002316849 * page 31, alinéa 1 - page 35, dernier alinéa *

## Description

La présente invention se rapporte à un procédé de conception de système de freinage à faible niveau de bruit et à un système obtenu par un tel procédé, en particulier un système de freinage comportant un frein à disque pour véhicule automobile.

Un frein à disque d'un type connu comporte un étrier, une chape montée fixe sur un porte-fusée du véhicule, l'étrier étant monté coulissant par rapport à cette chape, le frein à disque comporte également des garnitures de frein destinées à venir en contact avec les faces d'un disque de frein solidaires d'une roue, le système de freinage comporte également le disque de frein.

Lors d'une action de freinage, les plaquettes de frein viennent en contact des faces du disque de frein. L'ensemble du frein à disque est alors mis en vibration et est susceptible de générer un bruit de crissement (squeal en terminologie anglo-saxonne) compris entre 1kHertz et 15kHerz. Il est bien entendu que l'apparition d'un bruit lors d'un freinage est une source d'inquiétude pour le conducteur automobile puisque le système de freinage constitue un organe de sécurité et que tout bruit peut faire craindre à un disfonctionnement. D'autre part, les progrès réalisés pour rendre silencieux le moteur rendent les bruits provoqués par le système de freinage de plus en plus audibles, et impliquent que ceux-ci doivent être réduits voire si cela est possible supprimés. De plus, ce bruit est une source d'inconfort pour le conducteur et les passagers du véhicule.

Chaque élément a plusieurs modes propres auxquels correspond une fréquence de résonance. L'apparition du crissement provient du fait qu'une fréquence de résonance d'un mode propre est proche de la fréquence du bruit dit de crissement. Afin de réduire ou même de supprimer ce bruit, il est alors connu d'isoler chacun des éléments du système, de déterminer la fréquence propre de chacun des modes propres de ces éléments, puis ensuite de déterminer quels sont les éléments dont les fréquences sont proches de celle du bruit et ensuite de modifier chacun des éléments de manière à ce que les fréquences de résonance soient éloignées de la fréquence du bruit.

Il a toujours semblé que la méthode consistant à effectuer une étude élément par élément était la plus simple et la plus efficace. Ce procédé d'analyse et de suppression ou de réduction du bruit est très utilisé actuellement dans le domaine des systèmes de freinage. Cependant, il apparaît que ce procédé de conception n'apporte pas dans tous les cas une entière satisfaction, puisque certains freins ainsi conçus génèrent un bruit de crissement.

C'est par conséquent un but de la présente invention d'offrir un procédé de conception de systèmes de freinage silencieux.

C'est également le but de la présente invention d'offrir un procédé de conception de systèmes de freinage silencieux qui soit simple à mettre en oeuvre.

C'est également un but de la présente invention d'offrir des systèmes de freinage en particulier des freins à disque silencieux.

Ces buts sont atteints par un procédé consistant à non plus travailler élément par élément mais à étudier et analyser la réaction de sous-ensembles et à déplacer la ou les fréquences de résonances des modes propres des sous-ensembles intervenant dans la génération du bruit.

En effet, les inventeurs ont remarqué que de manière surprenante, il suffit de se limiter à l'étude des sous-ensembles et non à chacun des éléments de manière isolée constituant le système de freinage.

L'invention a alors pour avantage de simplifier l'étude puisqu'elle nécessite la détermination d'un nombre plus faibles de fréquences de résonance, la conception en est alors plus rapide.

La présente invention a alors pour objet un procédé de conception d'un système de freinage comportant un premier et un deuxième sous-ensembles comportant entre autres les étapes de :
- de déterminer les fréquences de résonance du mode propre de l'un et de l'autre des sous ensembles ;
- d'identifier sur la base des fréquences de résonance des modes propres, le ou les sous-ensembles intervenant dans la génération du bruit ;
- d'intervenir sur au moins l'un desdits sous-ensembles en cause afin d' éloigner les fréquences de résonances des deux sous-ensembles de manière à ce que le rapport entre la fréquence de résonance la plus élevée et la fréquence de résonance la plus faible soit au moins égale à 1,12, la modification d'une fréquence de résonance d'un mode propre s'effectuant par allègement ou augmentation de la masse d'un sous-ensemble , voir EP-A-1 058 020.

L'invention est définie par toutes les caractéristiques de la revendication 1.

La présente invention a également pour objet un procédé caractérisé en ce que le rapport est de préférence supérieur à 1.15.

La présente invention a également pour objet un procédé caractérisé en ce que le deuxième sous-ensemble comporte également un pivot des roue supportant le frein.

La présente invention a également pour objet un procédé caractérisé en ce que les ailettes ont une section transversale de forme trapézoïdale.

La présente invention sera mieux comprise à l'aide des dessins en annexes sur lesquels :
- La figure 1 est une vue en coupe d'un détail d'un système de freinage
- La figure 2 est un diagramme représentant les étapes du procédé de conception selon la présente invention ;
- La figure 3 est une vue partielle d'un disque de frein obtenu grâce au procédé selon la présente invention.

Pour des raisons de simplification, nous décrirons par la suite un système de freinage muni d'un frein à disque, cependant de manière usuel les systèmes de freinage comportent deux freins à disque et deux freins à tambour ou quatre freins à disque ou quatre freins à tambour. Il est bien entendu que le procédé de conception selon la présente invention s'applique à ces systèmes de freinage et qu'il suffit d'appliquer ce procédé aux différents freins.

De manière habituelle, les freins portés par le même essieux sont identiques, par conséquent le frein obtenu selon la présente invention pour un côté de l'essieu est utilisable pour l'autre côté de l'essieu.

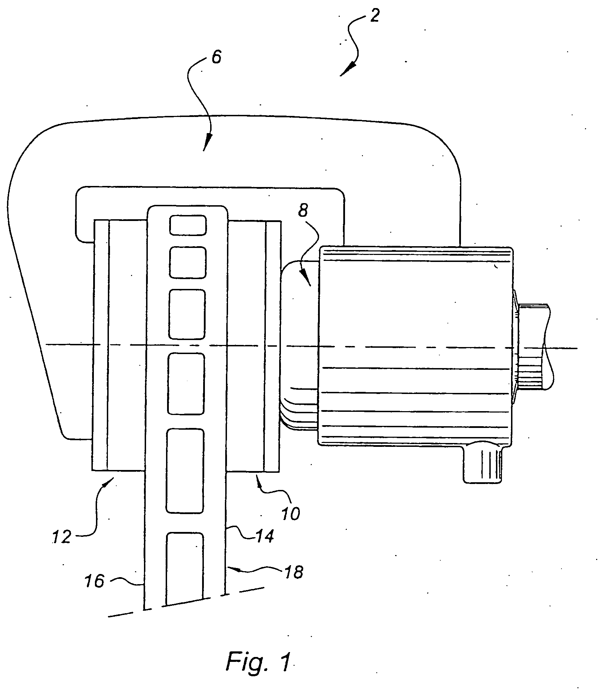

Sur la figure 1, on peut voir un système de freinage comportant au moins un frein à disque. Le frein à disque représenté est du type frein coulissant, mais la présente invention s'applique bien entendu également aux systèmes de freinage comportant des freins fixes. Le frein à disque 2 comporte une chape (non représentée) montée fixe sur un porte-fusée d'une roue, un étrier 6 monté coulissant dans la chape, un piston 8 monté à coulissement étanche dans l'étrier 6 et destiné à appliquer une première et une deuxième plaquettes de frein 10,12 contre des première et deuxièmes pistes de friction 14,16 d'un disque de frein 18 solidaire en rotation d'une roue.

Lors d'une commande de freinage, le piston est déplacé en direction du disque de frein 18 pour appliquer la première plaquette 10 contre la première face 14 du disque 18, puis par réaction l'étrier coulisse appliquant la deuxième plaquette 12 contre la deuxième face 16 du disque 18, provoquant alors le ralentissement du mouvement du disque et par conséquent de la roue.

C'est le contact entre le disque en rotation et les plaquettes qui est susceptible de provoquer le crissement ou squeal.

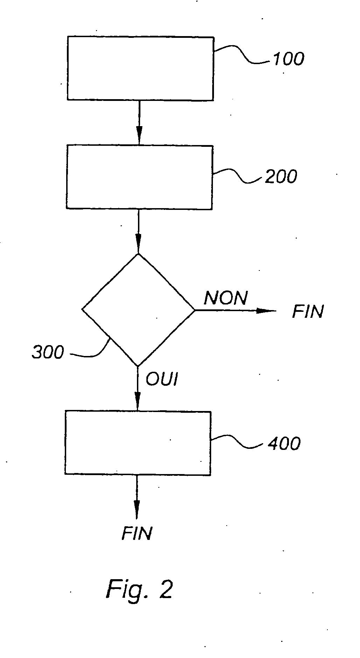

Sur la figure 2, on peut voir un diagramme représentant les principales étapes d'un procédé de conception d'un système de freinage selon la présente invention. Alors que les formes des différents éléments constituant le système de freinage ont été déterminées, le procédé consiste
- A l'étape 100 à définir deux sous-ensembles structurels par exemple dans le cas d'un frein à disque, les inventeurs ont défini comme premier sous-ensemble le disque et comme deuxième sous-ensemble l'étrier, la chape et la plaquette intérieure 10 ;
- A l'étape 200 à déterminer les fréquences de résonance des modes propres de chacun des sous-ensembles ;
- A l'étape 300 à vérifier si les valeurs de fréquences de résonance sont suffisamment éloignées pour que les sous-ensembles ne rentrent en résonance. Les inventeurs ont déterminés que pour obtenir les meilleurs résultats le rapport R entre la fréquence de résonance la plus élevée et la fréquence de résonance la plus faible devait être supérieur à 1.12, et de préférence supérieure à1.15 ;
- A l'étape 400, si les fréquences de résonance sont trop proches, à modifier la fréquence de résonance de l'un des sous-ensembles ou de chacun des sous-ensembles.

La modification des sous-ensemble consiste à alléger ou alourdir l'un ou l'autre ou les deux sous-ensembles.

Dans un premier exemple, le système de freinage comporte un frein à disque constitué par un premier sous ensemble formé par le disque et un deuxième sous-ensemble formé par la chape, l'étrier et la plaquette. Un mode propre du disque a une fréquence de résonance à 2,1 kHz et un sous-ensemble chape-étrier-plaquette a une fréquence de résonance à 1,9kHz, les inventeurs ont modifié le disque de manière à ce que la fréquence de résonance dudit mode propre soit déplacé à 2.5kHz. Pour cela, la masse du disque a été augmenté de 500 grammes. Le rapport R est alors égale à 1.31.

Dans un deuxième exemple, un mode propre du disque ayant une fréquence de résonance à 3,6kHz et un sous-ensemble chape-étrier-plaquette ayant une fréquence de résonance à 3,9kHz, les inventeurs ont modifié l'ensemble chape-étrier-plaquette de manière à ce que la fréquence de résonance dudit mode propre soit déplacé à 3,24kHz en augmentant la masse de l'étrier de 500 grammes. Le rapport R est égale 1.20.

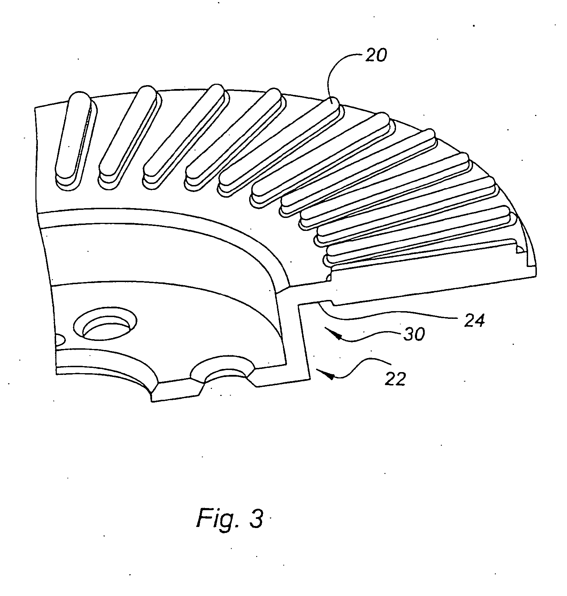

Sur la figure 3, on peut voir un exemple de modifications apportées à un disque de frein pour en augmenter la masse et donc en réduire la fréquence de résonance d'un mode propre.

Le disque comporte des ailettes 20 de refroidissement raccordant la première et la deuxième faces du disque de frein. Habituellement ces ailettes ont une section rectangulaire. Selon l'invention, celles-ci ont une section trapézoïdale de manière à en augmenter le volume et donc la masse. Dans l'exemple représenté, la section augmente dans la direction radiale vers l'extérieur du disque. Mais il est bien entendu que l'on peut prévoir au contraire une diminution de cette section des ailettes dans la direction radiale vers l'extérieur.

De plus le disque comporte dans sa partie centrale un chapeau 22 muni d'orifices de passages pour des vis de fixation à une roue. De manière connu, le chapeau 22 est raccordé à au moins une des pistes de friction par une partie annulaire appelée connexion 30. On peut alors prévoir de modifier la connexion pour augmenter au réduire la masse du disque de frein.

La plupart des disques de frein comporte un canal 24 de refroidissement annulaire pratiqué sur la base de la piste de friction à laquelle est raccordée le chapeau et entourant la chapeau, on peut également envisager de modifier la forme de ce canal pour modifier la masse du disque, par exemple en faisant varier son épaisseur et/ou sa profondeur.

Il est bien entendu que l'on peut prévoir d'augmenter ou de réduire la masse des plaquettes de frein en modifiant par exemple la taille de la plaque porte garniture, du piston en réalisant par exemple un piston en matière plastique si on souhaite réduire la masse ou en ajoutant une masse à l'intérieure du corps creux du piston et/ou de la chape.

Il est bien entendu que la présente invention s'applique également à des systèmes de freinage comportant des freins à disque comportant plusieurs pistons et/ou plusieurs disques

Il est également bien entendu que le procédé de conception selon la présente invention s'applique également à la conception des freins à tambour.

Il est bien entendu que le procédé de mise au point peut être appliqué pour tous les freins d'un véhicule automobile.

Il est également bien entendu que la procédé selon la présente invention peut s'appliquer à la conception de systèmes de freinage hydraulique, électro-hydraulique, entièrement électrique ou hybride.

La présente invention s'applique principalement au secteur automobile, en particulier aux voitures particulières

## Revendications

1. Procédé de conception d'un système de freinage comportant un premier et un deuxième sous-ensembles comportant entre autres les étapes :
- de déterminer les fréquences de résonance du mode propre de l'un et de l'autre des sous ensembles ;
- d'identifier sur la base des fréquences de résonance des modes propres, le ou les sous-ensembles intervenant dans la génération du bruit ;
- d'intervenir sur au moins l'un desdits sous-ensembles en cause afin d'éloigner les fréquences de résonances des deux sous-ensembles de manière à ce que le rapport (R) entre la fréquence de résonance la plus élevée et la fréquence de résonance la plus faible soit au moins égale à 1,12, la modification d'une fréquence de résonance d'un mode propre s'effectuant par allègement ou augmentation de la masse d'un sous-ensemble,
**caractérisé,**
- **en ce que** le premier sous-ensemble comprend un disque de frein et un deuxième sous-ensemble comprenant une chape, un étrier de frein (2), au moins un piston (8) monté à coulissement dans l'étrier (2), une première plaquette (10) de frein apte à être appliquées contre les faces du disque de frein par le piston,
- et **en ce que** l'étape d'intervention sur le premier sous-ensemble consiste entre autres à modifier la forme des ailettes (20) du disque de frein.

2. Procédé selon la revendication précédente **caractérisé en ce que** le rapport (R) est supérieur à 1.15.

3. Procédé selon la revendication 1 ou 2 **caractérisé en ce que** le deuxième sous-ensemble comporte également un pivot des roue supportant le frein.

4. Procédé selon la revendication précédente **caractérisé en ce que** les ailettes (20) ont une section transversale de forme trapézoïdale.

5. Système de freinage **caractérisé en ce qu'**il est obtenu à l'aide d'un procédé selon l'une quelconque des revendications précédentes.

## Claims

1. Method for designing a braking system comprising a first and a second sub-assembly comprising, amongst others, the steps of:
- determining the resonant frequencies of the natural mode of both sub-assemblies;
- identifying on the basis of the resonant frequencies of the natural modes, the sub-assembly or sub-assemblies involved in the generation of the noise;
- modifying at least one of said sub-assemblies in question, in order to space apart the resonant frequencies of the two sub-assemblies so that the ratio (R) between the highest resonant frequency and the lowest resonant frequency is at least equal to 1.12, the alteration of a resonant frequency of a natural mode being carried out by reducing or increasing the mass of a sub-assembly,
**characterized**
- **in that** the first sub-assembly comprises a brake disc and a second sub-assembly comprising a yoke, a brake caliper (2), at least one piston (8) slidably mounted in the caliper (2), a first brake pad (10) capable of being applied against the faces of the brake disc by the piston,
- and **in that** the step of modifying the first sub-assembly consists, amongst others, in altering the shape of the fins (20) of the brake disc.

2. Method according to the preceding claim, **characterized in that** the ratio (R) is greater than 1.15.

3. Method according to Claim 1 or 2, **characterized in that** the second sub-assembly also comprises a wheel pivot for supporting the brake.

4. Method according to the preceding claim, **characterized in that** the fins (20) have a transverse section of trapezoidal shape.

5. Braking system **characterized in that** it is obtained using a method according to any one of the preceding claims.

## Patentansprüche

1. Verfahren zum Entwerfen eines Bremssystems mit einer ersten und einer zweiten Unterbaugruppe, das unter anderem folgende Schritte aufweist:
- Bestimmen der Eigenschwingungs-Resonanzfrequenzen der einen und anderen der Unterbaugruppen;
- Identifizieren der auf die Erzeugung des Geräusches einwirkenden Unterbaugruppe(n) auf der Grundlage der Eigenschwingungs-Resonanzfrequenzen;
- Einwirken auf mindestens eine der betroffenen Baugruppen, um die Resonanzfrequenzen der beiden Unterbaugruppen voneinander zu entfernen, damit das Verhältnis (R) zwischen der höchsten und der niedrigsten Resonanzfrequenz mindestens gleich 1.12 ist, wobei die Änderung einer Eigenschwingungs-Resonanzfrequenz durch Verringerung oder Erhöhung der Masse einer Unterbaugruppe erfolgt,
**dadurch gekennzeichnet, dass**
- die erste Unterbaugruppe eine Bremsscheibe umfasst und eine zweite Unterbaugruppe einen Träger, einen Bremssattel (2), mindestens einen im Bremssattel (2) gleitend angebrachten Kolben (8), einen ersten Bremsbelag (10), der durch den Kolben gegen die Flächen der Bremsscheibe angelegt werden kann,
- und dass der Schritt des Einwirkens auf die erste Unterbaugruppe unter anderem darin besteht, die Form der Stege (20) der Bremsscheibe zu verändern.

2. Verfahren nach dem vorstehenden Anspruch, **dadurch gekennzeichnet, dass** das Verhältnis (R) größer als 1.15 ist.

3. Verfahren nach Anspruch 1 oder 2, **dadurch gekennzeichnet, dass** die zweite Unterbaugruppe auch einen Radträger aufweist, der die Bremse trägt.

4. Verfahren nach dem vorstehenden Anspruch, **dadurch gekennzeichnet, dass** die Stege (20) einen trapezförmigen Querschnitt haben.

5. Bremssystem, **dadurch gekennzeichnet, dass** es durch ein Verfahren nach einem der vorhergehenden Ansprüche erhalten wird.
